# EUROPEAN PATENT APPLICATION

(11) **EP 4 622 353 A1**
(43) Date of publication of application: **24.09.2025**
(21) Application number: 23909787.6
(22) Date of filing: 21.11.2023
(51) Int. Cl.: H04W 52/02

(54) **LNA BYPASS THRESHOLD SETTING METHOD, AND TERMINAL DEVICE AND STORAGE MEDIUM**

(30) Priority: 28.12.2022 CN 202211698640
(71) Applicant: Huawei Technologies Co., Ltd., Shenzhen, Guangdong 518129 (CN)
(72) Inventor: ZHOU, Ming, Shenzhen, Guangdong 518129 (CN); WANG, Tongbo, Shenzhen, Guangdong 518129 (CN)
(74) Representative: MERH-IP Matias Erny Reichl Hoffmann Patentanwälte PartG mbB
(86) International application number: PCT/CN2023/133017
(87) International publication number: WO 2024/139855

(57) **Abstract**

Embodiments of this application relate to the field of communication technologies, and provide a method for setting an LNA bypass threshold, a terminal device, and a storage medium. The method for setting the LNA bypass threshold is applied to the terminal device, and the terminal device includes the LNA. The method for setting the LNA bypass threshold includes: obtaining an MCS set of each of M Wi-Fi links corresponding to the LNA, where M is a positive integer, and the MCS set includes at least one MCS; and setting the LNA bypass threshold based on a first highest MCS in the MCS sets of the M Wi-Fi links. The LNA bypass threshold is set by using a highest MCS in an MCS set of a Wi-Fi link established by the terminal device, and an appropriate LNA bypass threshold is dynamically selected based on an actual communication status, to avoid setting the LNA bypass threshold to an excessively high value and reduce power consumption of the terminal device.

## Description

This application claims priority to Chinese Patent Application No. 202211698640.5, filed with the China National Intellectual Property Administration on December 28, 2022 and entitled "METHOD FOR SETTING LNA BYPASS THRESHOLD, TERMINAL DEVICE, AND STORAGE MEDIUM", which is incorporated herein by reference in its entirety.

### TECHNICAL FIELD

Embodiments of this application relate to the field of communication technologies, and in particular, to a method for setting a low-noise amplifier (low-noise amplifier, LNA) bypass threshold, a terminal device, and a readable storage medium.

### BACKGROUND

A wireless fidelity (wireless fidelity, Wi-Fi) technology is a widely applied wireless network transmission technology. With development of Wi-Fi communication, more attention is paid to reception performance and power consumption of Wi-Fi.

A Wi-Fi device usually uses an LNA at a radio frequency front-end, to improve radio frequency reception performance. Turning on and off the LNA is based on a bypass (bypass) threshold. When a signal strength is lower than the LNA bypass threshold, the LNA is turned on. This improves a receiver sensitivity and obtains a receiver gain, but increases power consumption.

Currently, the LNA bypass threshold is a fixed large value. As a result, the LNA of the Wi-Fi device is likely to be in an on state, leading to high power consumption of the Wi-Fi device.

### SUMMARY

Embodiments of this application provide a method for setting an LNA bypass threshold, a terminal device, and a storage medium, to reduce power consumption of the terminal device.

According to a first aspect, a method for setting an LNA bypass threshold is provided and applied to a terminal device. The terminal device includes the LNA. The method for setting the LNA bypass threshold includes: obtaining an MCS set of each of M Wi-Fi links corresponding to the LNA, where M is a positive integer, and the MCS set includes at least one MCS; and setting the LNA bypass threshold based on a first highest MCS in the MCS sets of the M Wi-Fi links.

According to the method for setting the LNA bypass threshold provided in the first aspect, the LNA bypass threshold is set based on a highest MCS in an MCS set of a Wi-Fi link that is established by the terminal device and that corresponds to the LNA, and an appropriate LNA bypass threshold is dynamically selected based on an actual communication status on the premise of meeting a receiver sensitivity requirement. This reduces the LNA bypass threshold, increases LNA bypass time, reduces power consumption of the terminal device, and prolongs standby duration of the terminal device.

In a possible implementation, each MCS in the MCS set corresponds to at least one operating bandwidth, and the setting the LNA bypass threshold based on the first highest MCS in the MCS sets of the M Wi-Fi links includes: setting the LNA bypass threshold based on a receiver sensitivity corresponding to a maximum operating bandwidth of the first highest MCS.

In this implementation, the specified LNA bypass threshold may cover an MCS packet with a lowest receiver sensitivity, reducing the LNA bypass threshold and reducing the power consumption of the terminal device.

In a possible implementation, the method for setting the LNA bypass threshold further includes: periodically obtaining a total service throughput rate of each Wi-Fi link, where the total service throughput rate of the Wi-Fi link includes a sum of throughput rates of a target service on the Wi-Fi link; if it is determined, based on a throughput rate threshold and total service throughput rates of the M Wi-Fi links, to renegotiate about MCS sets of the M Wi-Fi links, obtaining updated MCS sets of the M Wi-Fi links; and updating the LNA bypass threshold based on a second highest MCS in the updated MCS sets of the M Wi-Fi links.

In this implementation, whether there is a need to renegotiate about MCS sets is determined by using the total service throughput rate of the Wi-Fi link corresponding to the LNA and the throughput rate threshold. When there is a need to renegotiate about MCS sets, the LNA bypass threshold is updated based on the new second highest MCS. When an actual service throughput rate is low, an MCS order can be decreased by renegotiating about the MCS sets, to reduce the LNA bypass threshold, reduce the power consumption of the terminal device, and prolong the standby duration of the terminal device.

In a possible implementation, before it is determined, based on a throughput rate threshold and total service throughput rates of the M Wi-Fi links, to renegotiate about MCS sets of the M Wi-Fi links, the method further includes: determining that a service type of the target service on each Wi-Fi link is a preset low-throughput service type.

In this implementation, it is determined that each target service is of a low-throughput service type, that is, renegotiation about MCSs may be performed for the preset low-throughput service type, to ensure that a rate of a high-throughput rate service is not affected. For the low-throughput service type, if a highest MCS order is decreased after the renegotiation about MCS sets, the LNA bypass threshold is reduced, and the power consumption of the terminal device is reduced.

In a possible implementation, the target service on the Wi-Fi link includes all services on the Wi-Fi link.

In this implementation, it is ensured that current MCS sets or MCS sets that are after renegotiation do not affect rates of all the services on the Wi-Fi link.

In a possible implementation, the target service on the Wi-Fi link includes a foreground service on the Wi-Fi link.

In this implementation, it is ensured that current MCS sets or MCS sets that are after renegotiation do not affect a rate of the foreground service on the Wi-Fi link, improving user experience.

In a possible implementation, the total service throughput rate of the Wi-Fi link is any one of the following: a sum of downlink throughput rates of the target service on the Wi-Fi link; or a sum of downlink throughput rates of the target service on the Wi-Fi link, and a sum of uplink throughput rates of the target service on the Wi-Fi link; or a sum of downlink throughput rates and uplink throughput rates of the target service on the Wi-Fi link.

In a possible implementation, that it is determined, based on the throughput rate threshold and the total service throughput rates of the M Wi-Fi links, to renegotiate about MCS sets of the M Wi-Fi links includes: obtaining, based on the total service throughput rate of each Wi-Fi link, total throughput rates corresponding to the LNA in a plurality of cycles, where a total throughput rate corresponding to the LNA in each cycle is equal to a sum of total service throughput rates of the M Wi-Fi links in the cycle; and determining, based on the throughput rate threshold and the total throughput rates corresponding to the LNA in the plurality of cycles, to renegotiate about MCS sets of the M Wi-Fi links.

In this implementation, the total throughput rates corresponding to the LNA in the plurality of cycles are obtained, and actual service throughput rate data of the terminal device in the plurality of cycles is compared with the throughput rate threshold, to determine whether to renegotiate about MCS sets of the M Wi-Fi links. This avoids throughput rate fluctuation, and improves accuracy of whether to renegotiate about MCS sets.

In a possible implementation, that it is determined, based on the throughput rate threshold and the total throughput rates corresponding to the LNA in the plurality of cycles, to renegotiate about MCS sets of the M Wi-Fi links includes: if total throughput rates corresponding to the LNA in consecutive X cycles in the plurality of cycles are all less than the throughput rate threshold, determining to renegotiate about MCS sets of the M Wi-Fi links, where X is an integer greater than 1, and a highest MCS in MCS sets of the Wi-Fi links that are after negotiation is lower than a highest MCS in the MCS sets of the Wi-Fi links that are before negotiation.

In this implementation, if the total throughput rates corresponding to the LNA in the consecutive X cycles are all less than the throughput rate threshold, it indicates that a service rate provided by current MCS sets exceeds an actual service throughput rate of the terminal device, and renegotiation about MCS sets of the M Wi-Fi links may be performed, and a highest MCS in MCS sets that are after renegotiation decreases. Further, this can reduce the LNA bypass threshold, and reduce the power consumption of the terminal device.

In a possible implementation, that it is determined, based on the throughput rate threshold and the total throughput rates corresponding to the LNA in the plurality of cycles, to renegotiate about MCS sets of the M Wi-Fi links includes: if total throughput rates corresponding to the LNA in consecutive Y cycles in the plurality of cycles are all greater than the throughput rate threshold, determining to renegotiate about MCS sets of the M Wi-Fi links, where Y is a positive integer, and the highest MCS in the MCS sets of the Wi-Fi links that are after negotiation is higher than the highest MCS in the MCS sets of the Wi-Fi links that are before negotiation.

In this implementation, if the total throughput rates corresponding to the LNA in the consecutive Y cycles are all greater than the throughput rate threshold, it indicates that a service rate provided by the current MCS sets may not meet an actual service throughput rate of the terminal device, and renegotiation about MCS sets of the M Wi-Fi links may be performed, and a highest MCS in the renegotiated MCS sets increases. This ensures the service rate.

In a possible implementation, Y is less than X.

In this implementation, adjustment of decreasing the MCS order is more difficult than that of increasing the MCS order, ensuring a service rate of a service performed by the terminal device.

In a possible implementation, there is a difference of a preset MCS level between the highest MCS in the MCS sets of the Wi-Fi links that are after negotiation and the highest MCS in the MCS sets of the Wi-Fi links that are before negotiation.

In a possible implementation, the preset MCS level is level 1.

In a possible implementation, the highest MCS in the MCS sets of the Wi-Fi links that are after the negotiation is higher than or equal to a preset minimum MCS level.

In this implementation, it is ensured that the MCS sets corresponding to the Wi-Fi links can provide a rate corresponding to the minimum MCS level, ensuring service quality.

In a possible implementation, the highest MCS in the MCS sets of the Wi-Fi links that are after the negotiation is a highest MCS level supported by the terminal device.

In a possible implementation, that it is determined, based on the throughput rate threshold and the total service throughput rates of the M Wi-Fi links, to renegotiate about MCS sets of the M Wi-Fi links includes: determining, based on the throughput rate threshold and the total service throughput rates of the M Wi-Fi links, to renegotiate about MCS sets of N Wi-Fi links of the M Wi-Fi links, where N is a positive integer less than or equal to M.

In this implementation, renegotiation about MCS sets of all or some of the M Wi-Fi links may be performed.

In a possible implementation, the N Wi-Fi links include first N Wi-Fi links obtained by sorting the M Wi-Fi links in ascending order based on the total service throughput rates.

In this implementation, renegotiation about an MCS set of a Wi-Fi link with a smaller actual service throughput rate is first performed based on the total service throughput rates of the Wi-Fi links, improving rationality of renegotiating about the MCS sets.

In a possible implementation, the throughput rate threshold is determined based on the first highest MCS.

In this implementation, the throughput rate threshold is determined based on the first highest MCS in the MCS sets of the M Wi-Fi links corresponding to the LNA at current time, improving accuracy of the throughput rate threshold, and improving accuracy of determining whether to renegotiate about MCS sets.

In a possible implementation, the throughput rate threshold is determined based on a rate corresponding to the maximum operating bandwidth of the first highest MCS.

In this implementation, a larger operating bandwidth corresponding to the MCS indicates a higher rate. The throughput rate threshold is determined based on the rate corresponding to the maximum operating bandwidth of the first highest MCS, to ensure that the current MCS sets or MCS sets that are after renegotiation do not affect a rate of the target service on the Wi-Fi link.

According to a second aspect, an apparatus for setting an LNA bypass threshold is provided. The apparatus includes: a first processing module, configured to obtain an MCS set of each of M Wi-Fi links corresponding to the LNA, where M is a positive integer, and the MCS set includes at least one MCS; and a second processing module, configured to set the LNA bypass threshold based on a first highest MCS in the MCS sets of the M Wi-Fi links.

In a possible implementation, each MCS in the MCS set corresponds to at least one operating bandwidth, and the second processing module is configured to set the LNA bypass threshold based on a receiver sensitivity corresponding to a maximum operating bandwidth of the first highest MCS.

In a possible implementation, the first processing module is further configured to: periodically obtain a total service throughput rate of each Wi-Fi link, where the total service throughput rate of the Wi-Fi link includes a sum of throughput rates of a target service on the Wi-Fi link; if it is determined, based on a throughput rate threshold and total service throughput rates of the M Wi-Fi links, to renegotiate about MCS sets of the M Wi-Fi links, obtain updated MCS sets of the M Wi-Fi links; and the second processing module is further configured to: update the LNA bypass threshold based on a second highest MCS in the updated MCS sets of the M Wi-Fi links.

In a possible implementation, the first processing module is further configured to: before it is determined, based on a throughput rate threshold and total service throughput rates of the M Wi-Fi links, to renegotiate about MCS sets of the M Wi-Fi links, determine that a service type of the target service on each Wi-Fi link is a preset low-throughput service type.

In a possible implementation, the target service on the Wi-Fi link includes all services on the Wi-Fi link.

In a possible implementation, the target service on the Wi-Fi link includes a foreground service on the Wi-Fi link.

In a possible implementation, the total service throughput rate of the Wi-Fi link is any one of the following: a sum of downlink throughput rates of the target service on the Wi-Fi link; or a sum of downlink throughput rates of the target service on the Wi-Fi link, and a sum of uplink throughput rates of the target service on the Wi-Fi link; or a sum of downlink throughput rates and uplink throughput rates of the target service on the Wi-Fi link.

In a possible implementation, the first processing module is configured to: obtain, based on the total service throughput rate of each Wi-Fi link, total throughput rates corresponding to the LNA in a plurality of cycles, where a total throughput rate corresponding to the LNA in each cycle is equal to a sum of total service throughput rates of the M Wi-Fi links in the cycle; and determine, based on the throughput rate threshold and the total throughput rates corresponding to the LNA in the plurality of cycles, to renegotiate about MCS sets of the M Wi-Fi links.

In a possible implementation, the first processing module is configured to: if total throughput rates corresponding to the LNA in consecutive X cycles in the plurality of cycles are all less than the throughput rate threshold, determine to renegotiate about MCS sets of the M Wi-Fi links, where X is an integer greater than 1, and a highest MCS in MCS sets of the Wi-Fi links that are after negotiation is lower than a highest MCS in the MCS sets of the Wi-Fi links that are before negotiation.

In a possible implementation, the first processing module is configured to: if total throughput rates corresponding to the LNA in consecutive Y cycles in the plurality of cycles are all greater than the throughput rate threshold, determine to renegotiate about MCS sets of the M Wi-Fi links, where Y is a positive integer, and the highest MCS in the MCS sets of the Wi-Fi links that are after negotiation is higher than the highest MCS in the MCS sets of the Wi-Fi links that are before negotiation.

In a possible implementation, Y is less than X.

In a possible implementation, there is a difference of a preset MCS level between the highest MCS in the MCS sets of the Wi-Fi links that are after negotiation and the highest MCS in the MCS sets of the Wi-Fi links that are before negotiation.

In a possible implementation, the preset MCS level is level 1.

In a possible implementation, the highest MCS in the MCS sets of the Wi-Fi links that are after the negotiation is higher than or equal to a preset minimum MCS level.

In a possible implementation, the highest MCS in the MCS sets of the Wi-Fi links that are after the negotiation is a highest MCS level supported by the terminal device.

In a possible implementation, the first processing module is configured to determine, based on the throughput rate threshold and the total service throughput rates of the M Wi-Fi links, to renegotiate about MCS sets of N Wi-Fi links of the M Wi-Fi links, where N is a positive integer less than or equal to M.

In a possible implementation, the N Wi-Fi links include first N Wi-Fi links obtained by sorting the M Wi-Fi links in ascending order based on the total service throughput rates.

In a possible implementation, the throughput rate threshold is determined based on the first highest MCS.

In a possible implementation, the throughput rate threshold is determined based on a rate corresponding to the maximum operating bandwidth of the first highest MCS.

According to a third aspect, a terminal device is provided, including a processor. The processor is configured to: be coupled to a memory, read instructions in the memory, and enable, based on the instructions, the terminal device to perform the method provided in the first aspect.

According to a fourth aspect, a program is provided. When the program is executed by a processor, the program is used to perform the method provided in the first aspect.

According to a fifth aspect, a computer-readable storage medium is provided. The computer-readable storage medium stores instructions. When the instructions are run on a computer or a processor, the method provided in the first aspect is implemented.

According to a sixth aspect, a program product is provided. The program product includes a computer program, the computer program is stored in a readable storage medium, at least one processor of a device may read the computer program from the readable storage medium, and the at least one processor executes the computer program, so that the device implements the method provided in the first aspect.

### BRIEF DESCRIPTION OF DRAWINGS

FIG. 1 is a diagram of a Wi-Fi system in an AP mode and a STA mode according to an embodiment of this application;
FIG. 2A to FIG. 2D are diagrams of a group of application scenarios in the mode shown in FIG. 1;
FIG. 3 is a diagram of a Wi-Fi system in a Wi-Fi P2P mode according to an embodiment of this application;
FIG. 4A to FIG. 4C are diagrams of a group of application scenarios in the mode shown in FIG. 3;
FIG. 5 is a principle diagram of an LNA bypass according to an embodiment of this application;
FIG. 6 is a message interaction diagram of MCS renegotiation according to an embodiment of this application;
FIG. 7 is a flowchart of a method for setting an LNA bypass threshold according to an embodiment of this application;
FIG. 8 is a principle diagram of ping-pong avoidance of an LNA bypass according to an embodiment of this application;
FIG. 9 is another flowchart of a method for setting an LNA bypass threshold according to an embodiment of this application;
FIG. 10 is a diagram of a structure of an apparatus for setting an LNA bypass threshold according to an embodiment of this application; and
FIG. 11 is a diagram of a structure of a terminal device according to an embodiment of this application.

### DESCRIPTION OF EMBODIMENTS

The following describes embodiments of this application with reference to the accompanying drawings.

A method for setting an LNA bypass threshold provided in this application is applicable to a scenario in which a terminal device performs Wi-Fi communication. In some implementations, the terminal device is powered by using a power supply apparatus with limited power, for example, a battery, and has a requirement on power consumption and standby duration.

A name and a type of the terminal device are not limited in this application. For example, the terminal device is also referred to as a terminal, a mobile terminal, user equipment, an electronic device, a communication device, a Wi-Fi device, a wireless Wi-Fi device, or the like. Currently, an example of some terminal devices is a mobile phone, a tablet computer, a notebook computer, a palmtop computer, a personal computer, a smart speaker, a smart screen, a wearable device, a virtual reality (virtual reality, VR) device, an augmented reality (augmented reality, AR) device, a mobile internet device (mobile internet device, MID), or a device in a smart home (smart home).

For ease of description, an example in which the terminal device is a mobile phone or a tablet computer is used in this application.

It should be noted that a Wi-Fi communication frequency band, a communication protocol, and a Wi-Fi communication manner are not limited in this application.

With development of Wi-Fi communication, the Wi-Fi communication frequency band and the communication protocol are also continuously developing and being updated. The 802.11 series standards released by the Institute of Electrical and Electronics Engineers (institute of electrical and electronics engineers, IEEE) can be divided into six generations. 2.4 GHz is an earliest and most commonly used Wi-Fi frequency band, and supported Wi-Fi communication protocols include 802.11b, 802.11g, 802.11n, and the like. 2.4 GHz and 5 GHz are also referred to as dual-band Wi-Fi. Wi-Fi communication protocols supported by 5 GHz include 802.11n, 802.11ac, and the like. 802.11n is also referred to as high throughput (high throughput, HT) or Wi-Fi 4. 802.11ac is also referred to as very high throughput (very high throughput, VHT) or Wi-Fi 5. 802.11ax is also referred to as Wi-Fi 6.

The Wi-Fi communication manner may include but is not limited to the following manners: a wireless access point (access point, AP) mode, a wireless terminal (station, STA) mode, a Wi-Fi direct (peer-to-peer, P2P) mode, and the like.

### 1. AP mode and STA mode

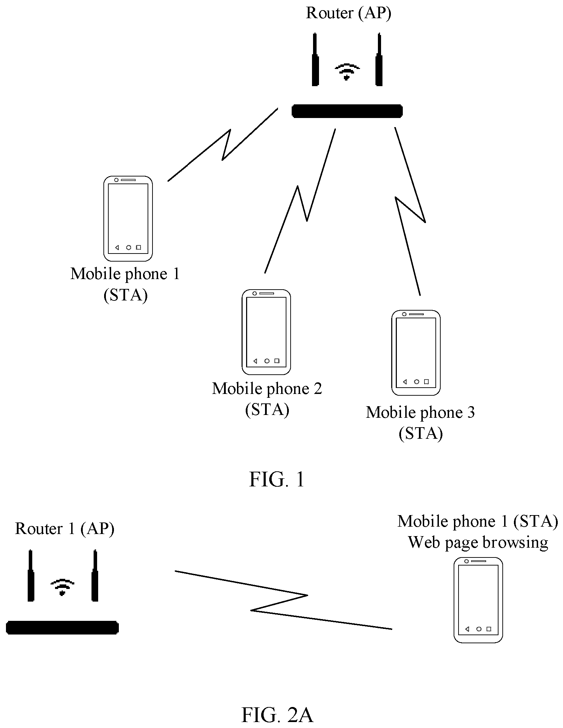

For example, FIG. 1 shows a scenario in which an AP performs Wi-Fi communication with STAs. As a primary device, the AP manages and controls the STAs to form a wireless network. The AP works in an AP mode, also referred to as a primary mode (master mode). The STAs work in a STA mode, and the STA mode may also be referred to as a secondary mode. At least one STA may access the AP for Wi-Fi communication. A quantity and types of the STAs are not limited in this application. For example, in FIG. 1, a communication environment includes a router, a mobile phone 1, a mobile phone 2, and a mobile phone 3. The router is an AP, and the mobile phone 1 to the mobile phone 3 are STAs.

It should be noted that a service performed by the STA is not limited in this application. For example, typical services include web page browsing, online video, online audio, and file download.

For example, FIG. 2A to FIG. 2D are diagrams of a group of application scenarios in the mode shown in FIG. 1.

In an example, as shown in FIG. 2A, an AP is a router 1, a STA is a mobile phone 1, and the mobile phone 1 accesses the router 1 to perform a web page browsing service.

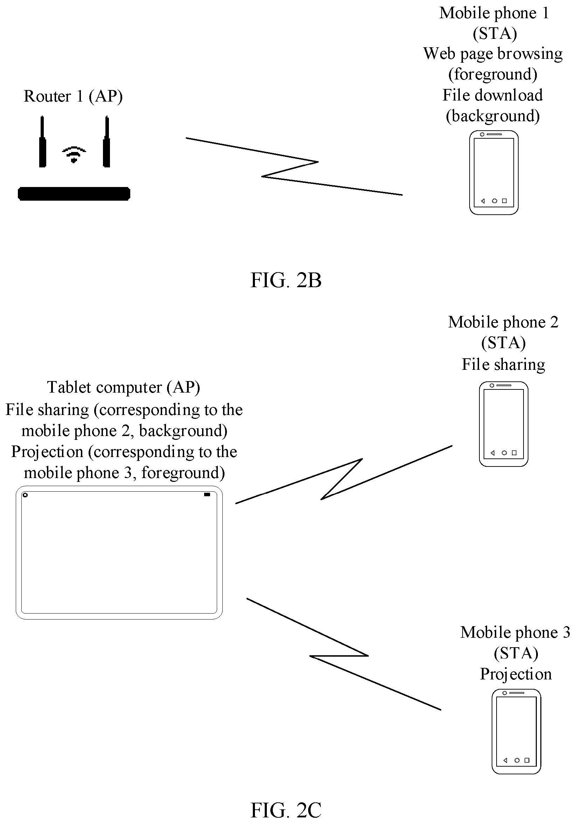

In another example, as shown in FIG. 2B, an AP is the router 1, and a STA is the mobile phone 1. The mobile phone 1 accesses the router 1 to perform a web page browsing service and a file download service. Web page browsing is a foreground service, and file download is a background service.

In still another example, as shown in FIG. 2C, a tablet computer is used as a Wi-Fi hotspot to provide a Wi-Fi network, and the tablet computer is an AP. STAs include a mobile phone 2 and a mobile phone 3. The mobile phone 2 accesses the tablet computer to perform a file sharing service, to transmit a file to the tablet computer. The mobile phone 3 accesses the tablet computer to perform a projection service, to perform projection onto the tablet computer. Projection is a foreground service, and file transfer is a background service.

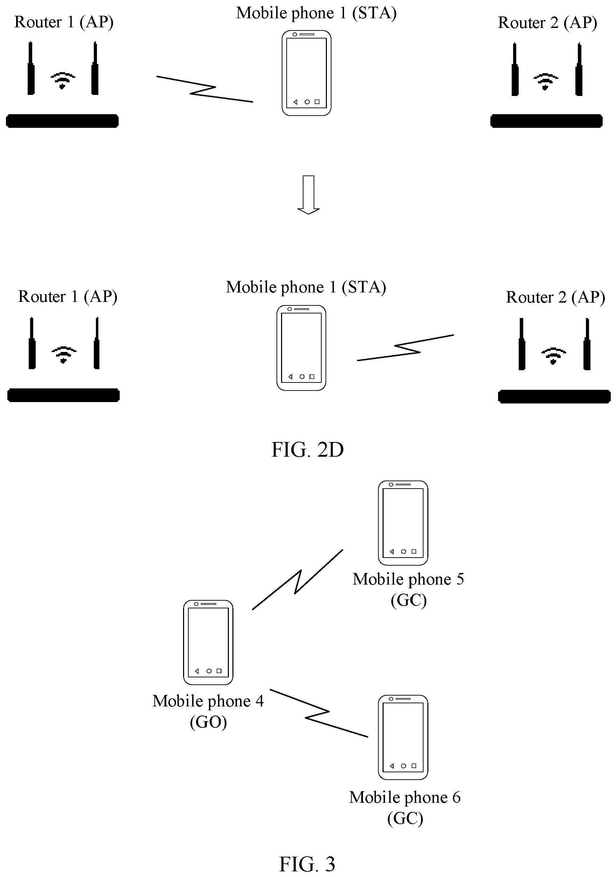

In still another example, as shown in FIG. 2D, a STA is the mobile phone 1. First, the mobile phone 1 accesses the router 1 for Wi-Fi communication. Then, the mobile phone 1 switches from accessing the router 1 to accessing a router 2 for Wi-Fi communication. In this application scenario, an AP accessed by the STA switches from the router 1 to the router 2.

### 2. Wi-Fi P2P mode

The Wi-Fi P2P mode is also referred to as Wi-Fi direct or P2P, and can implement direct communication between two devices without an AP. In the Wi-Fi P2P mode, there are two roles: a P2P server (group owner, GO) and a P2P client (group client, GC). After initiating a P2P connection, the two devices perform GO/GC negotiation. After negotiation is complete, one device is used as the GO, and the other device is used as the GC. Determining of the GO or the GC is independent of an initiator or a receiver of the P2P connection between the two devices.

For example, FIG. 3 shows a Wi-Fi P2P networking scenario. In FIG. 3, a mobile phone 4 is used as a GO, a mobile phone 5 and a mobile phone 6 are used as GCs, and the mobile phone 4 to the mobile phone 6 all work in the Wi-Fi P2P mode. The mobile phone 4 may perform direct communication with the mobile phone 5, and the mobile phone 4 may perform direct communication with the mobile phone 6.

It should be noted that a service performed by the GO and the GC during Wi-Fi communication is not limited in this application. Typical services include online video, online audio, projection, file download, file sharing, and the like.

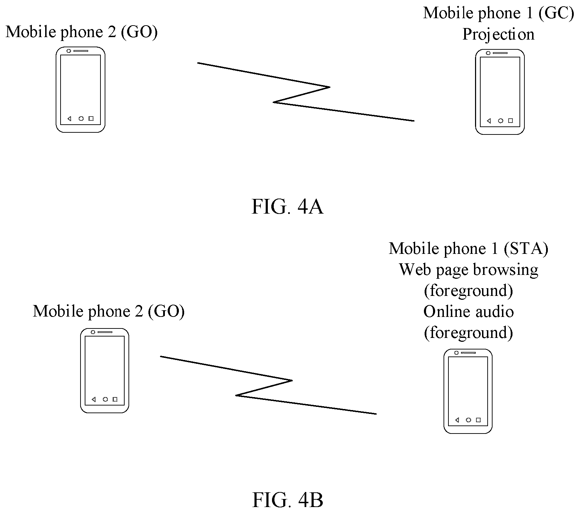

For example, FIG. 4A to FIG. 4C are diagrams of a group of application scenarios in the mode shown in FIG. 3.

In an example, as shown in FIG. 4A, a GO is a mobile phone 2, a GC is a mobile phone 1, and the mobile phone 1 performs Wi-Fi direct communication with the mobile phone 2. The mobile phone 1 performs a projection service, to perform projection onto the mobile phone 2.

In another example, as shown in FIG. 4B, a GO is the mobile phone 2, a GC is the mobile phone 1, and the mobile phone 1 performs Wi-Fi direct communication with the mobile phone 2. The mobile phone 1 performs a web page browsing service and an online audio service.

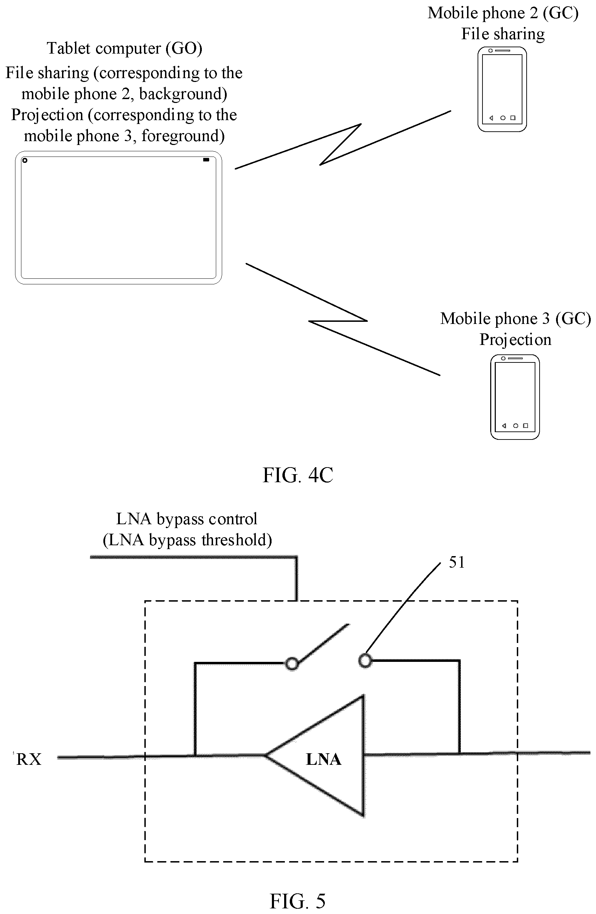

In still another example, as shown in FIG. 4C, a GO is a tablet computer, and GCs include the mobile phone 2 and a mobile phone 3. The mobile phone 2 performs Wi-Fi direct communication with the tablet computer, and the mobile phone 2 performs a file sharing service to transfer a file to the tablet computer. The mobile phone 3 performs Wi-Fi direct communication with the tablet computer, and the mobile phone 3 performs a projection service, to perform projection onto the tablet computer. Projection is a foreground service, and file transfer is a background service.

For ease of understanding this application, the following describes concepts in this application.

### 1. LNA and bypass threshold

The LNA may amplify a signal received from an antenna, so that a subsequent electronic device, circuit, or device processes the signal. The LNA is disposed in a terminal device that supports Wi-Fi communication, to improve radio frequency performance. Optionally, to reduce a loss of a signal passing through a transmission line, the LNA is usually located at a front end of a radio frequency receiver in the terminal device, for example, at a position close to the antenna, and is a first-stage active circuit of the receiver.

After the LNA is turned on (LNA on), a receiver gain can be obtained, but power consumption increases. On the contrary, when the LNA is turned off (LNA off), the power consumption does not increase, but the receiver gain is not obtained. Therefore, when the terminal device is in a weak field environment with less received signal strength, the LNA may be turned on to improve a receiver gain. On the contrary, when the terminal device is in a strong field environment with greater received signal strength, the LNA may be turned off, to reduce power consumption.

Turning the LNA on and off is based on a signal strength threshold, which is referred to as a bypass threshold or an LNA bypass threshold. Turning the LNA off may also be represented as the LNA being in a bypass state, or an LNA bypass, or mean that the LNA is bypassed. A bypass is a protection manner based on a physical link. A working status of the physical link includes a normal working state and a bypass protection state.

For example, FIG. 5 is a principle diagram of an LNA bypass according to an embodiment of this application. As shown in FIG. 5, the LNA is disposed on a receive (receive, RX) channel of the terminal device, and LNA bypass control is based on the LNA bypass threshold. When received signal strength is greater than the LNA bypass threshold, it is considered that the terminal device is in a strong field environment, and the LNA does not need to be turned on. A status of a switch 51 is controlled, so that the LNA is bypassed and does not work, reducing power consumption. When received signal strength is less than the LNA bypass threshold, it is considered that the terminal device is in a weak field environment, and the LNA needs to be turned on. A status of a switch 51 is controlled, so that the LNA works, improving a receiver gain.

It should be noted that a quantity of LNAs in the terminal device is not limited in this application. In Wi-Fi communication, the LNA supports a Wi-Fi communication frequency band. In some implementations, the LNA supports one of a plurality of Wi-Fi communication frequency bands. For example, the LNA supports 2.4 GHz or 5 GHz. In this implementation, if the terminal device supports dual-mode Wi-Fi communication, two LNAs need to be included. In some other implementations, the LNA may support at least two frequency bands of a plurality of Wi-Fi communication frequency bands. For example, the LNA supports 2.4 GHz and 5 GHz.

### 2. Modulation and coding scheme (modulation coding scheme, MCS), a receiver sensitivity, a physical rate, and a relationship between the MCS and a bypass threshold

Rate configuration of the terminal device in Wi-Fi communication is implemented by using an MCS index. In some implementations, the MCS index is also referred to as an MCS order, an MCS level, or an MCS class.

A communication protocol specifies an MCS modulation and coding table, which is used to represent rates corresponding to different MCSs. In the MCS modulation and coding table, the MCS index is used as a row, a factor affecting a rate is used as a column, and each MCS index corresponds to a physical rate under a group of parameters. The factor affecting the rate include a modulation method, a coding rate, and a quantity of spatial streams. Coding rate (rate or Rate)=quantity of bits before coding/quantity of bits after coding. When the coding rate is 1, no coding is performed. The spatial streams are different data streams including independently coded signals and are independently and concurrently sent by a plurality of antennas. The spatial streams are supported by multiple-input multiple-output (multiple-input multiple-output, MIMO) spatial multiplexing. The quantity of spatial streams depends on a quantity of transmit antennas.

In addition, each MCS index corresponds to different receiver sensitivities in different operating bandwidths. The receiver sensitivity, also referred to as minimum sensitivity (Minimum sensitivity), means minimum electromagnetic wave energy that can be identified by a receiver, measured in dBm, or means minimum signal receive power that can correctly parse a useful signal. A larger value of the receiver sensitivity indicates larger minimum signal receive power that can correctly parse a signal and a lower receiver sensitivity. On the contrary, a smaller value of the receiver sensitivity indicates a higher receiver sensitivity.

In different communication protocols, MCS modulation and coding tables are different, and physical rates and receiver sensitivities corresponding to MCS indexes are also different. For example, with reference to Table 1 and Table 2, some MCSs specified in the 802.11ac protocol and related information thereof are described.

**Table 1**

| MCS index | Modulation method | Coding rate (Rate) | Minimum sensitivity (20 MHz PPDU) (dBm) | Minimum sensitivity (40 MHz PPDU) (dBm) | Minimum sensitivity (80 MHz PPDU) (dBm) | Minimum sensitivity (160 MHz or 80+80 MHz PPDU) (dBm) |
|---|---|---|---|---|---|---|
| 0 | BPSK | 1/2 | -82 | -79 | -76 | -73 |
| 1 | QPSK | 1/2 | -79 | -76 | -73 | -70 |
| 2 | QPSK | 3/4 | -77 | -74 | -71 | -68 |
| 3 | 16-QAM | 1/2 | -74 | -71 | -68 | -65 |
| 4 | 16-QAM | 3/4 | -70 | -67 | -64 | -61 |
| 5 | 64-QAM | 2/3 | -66 | -63 | -60 | -57 |
| 6 | 64-QAM | 3/4 | -65 | -62 | -59 | -56 |
| 7 | 64-QAM | 5/6 | -64 | -61 | -58 | -55 |
| 8 | 256-QAM | 3/4 | -59 | -56 | -53 | -50 |
| 9 | 256-QAM | 5/6 | -57 | -54 | -51 | -48 |

Table 1 shows 10 MCSs specified in the 802.11ac protocol, and MCS indexes are MCSO to MCS9 respectively. Different MCSs correspond to different physical rates (not shown in Table 1). A smaller MCS index value indicates a lower MCS order or a lower level, and a lower physical rate. On the contrary, a larger MCS index value indicates a higher physical rate, and a higher MCS order or a higher level. For example, in MCSO to MCS9, MCSO is a minimum MCS or a lowest MCS, and MCS9 is a maximum MCS or a highest MCS. For another example, MCS6 is higher than MCS5 but lower than MCS7.

Different MCSs correspond to different modulation methods and coding rates. The modulation method includes but is not limited to: binary phase shift keying (binary phase shift keying, BPSK), quadrature phase shift keying (quadrature reference phase shift keying, QPSK), 16-QAM, 64-QAM, and 256-QAM, where QAM means quadrature amplitude modulation (quadrature amplitude modulation). The coding rate includes but is not limited to 1/2, 2/3, 3/4, and 5/6. For example, refer to a first row in Table 1. A modulation method corresponding to MCSO is BPSK, and a coding rate corresponding to MCSO is 1/2. For another example, refer to a last row in Table 1. A modulation method corresponding to MCS9 is 256-QAM, and a coding rate corresponding to MCS9 is 5/6.

Table 1 shows four operating bandwidths: 20 MHz, 40 MHz, 80 MHz, and 160 MHz (or 80+80 MHz). APPDU means a presentation protocol data unit (presentation protocol data unit). For an MCS, a larger operating bandwidth indicates a larger value of a corresponding receiver sensitivity and a lower receiver sensitivity. For example, refer to the first row in Table 1. Receiver sensitivities of MCSO in operating bandwidths of 20 MHz, 40 MHz, 80 MHz, and 160 MHz are - 82 dBm, -79 dBm, -76 dBm and -73 dBm respectively. A larger value indicates a lower receiver sensitivity. For an operating bandwidth, a higher MCS indicates a larger value of a corresponding receiver sensitivity and a lower receiver sensitivity. For example, refer to a fourth column in Table 1. In an operating bandwidth of 20 MHz, a receiver sensitivity corresponding to MCSO is -82 dBm, a receiver sensitivity corresponding to MCS1 is -79 dBm, and a receiver sensitivity corresponding to MCS9 is -57 dBm. From MCSO to MCS9, values of receiver sensitivities become larger, and the receiver sensitivities become lower. In addition, in a same operating bandwidth, a difference between receiver sensitivities corresponding to a high-order MCS and a low-order MCS is large. For example, in an operating bandwidth of 20 MHz, a receiver sensitivity corresponding to MCSO is -82 dBm, a receiver sensitivity corresponding to MCS9 is -57 dBm, and a difference is 25 dBm.

**Table 2**

| MCS | Sensitivity required by a protocol (dBm) | Physical rate (Mbps) |
|---|---|---|
| MCS6 2*2 | -59 | 585 |
| MCS7 2*2 | -58 | 650 |
| MCS8 2*2 | -53 | 780 |
| MCS9 2*2 | -51 | 867 |

Table 2 shows four MCSs in an operating bandwidth of 80 MHz specified in the 802.11ac protocol are MCS6 to MCS9 respectively. 2*2 indicates that there are two transmit antennas and two receive antennas in MIMO spatial multiplexing. Physical rates of MCS6 to MCS9 are 585 Mbps, 650 Mbps, 780 Mbps, and 867 Mbps respectively. Required receiver sensitivities of MCS6 to MCS9 are -59 dBm, -58 dBm, -53 dBm, and -51 dBm respectively.

In order that the terminal device can demodulate a received MCS packet, the LNA bypass threshold needs to be at least greater than a receiver sensitivity corresponding to an MCS level of the MCS packet. In actual communication of the terminal device, a plurality of negotiation about MCSs is usually performed based on different communication protocols and different services. In order that the terminal device can demodulate all received MCS packets, the LNA bypass threshold needs to cover an MCS packet with a lowest receiver sensitivity, that is, the LNA bypass threshold needs to be greater than a receiver sensitivity with a maximum value.

### 3. Wi-Fi link, MCS set, and MCS negotiation

Two terminal devices that perform Wi-Fi communication may be referred to as a first terminal device and a second terminal device. A Wi-Fi link needs to be established when the first terminal device and the second terminal device perform Wi-Fi communication. A quantity of Wi-Fi links is not limited in this application, and there is at least one Wi-Fi link.

For ease of description, an example in which a Wi-Fi link is established between the first terminal device and the second terminal device is used for description in this application. For example, in FIG. 2C, a Wi-Fi link is established between the tablet computer and the mobile phone 2, and a Wi-Fi link is established between the tablet computer and the mobile phone 3.

The first terminal device and the second terminal device negotiate an MCS set (or referred to as an MCS rate set) for the Wi-Fi link. The MCS set includes at least one MCS, to support a service performed by the first terminal device and the second terminal device by using the Wi-Fi link. For example, the MCS set may include MCS6 to MCS8. For another example, the MCS set may include all MCSs, and may be referred to as a full-order MCS. The first terminal device and the second terminal device may further renegotiate about an MCS set for the Wi-Fi link.

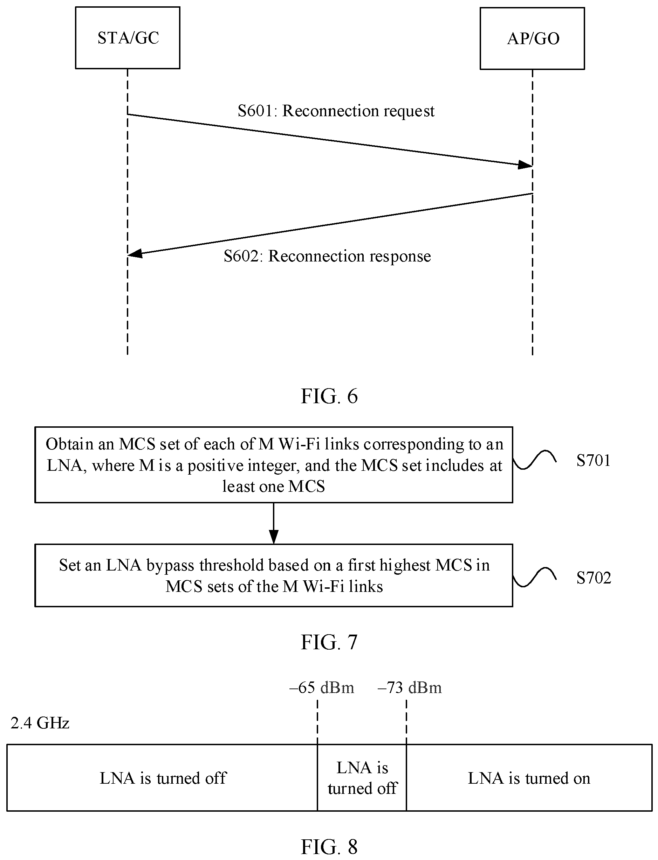

For processes of negotiating about the MCS and renegotiating about the MCS, refer to a Wi-Fi communication protocol. Details are not described in this application. For ease of understanding, an implementation of MCS renegotiation is briefly described with reference to FIG. 6.

FIG. 6 is a message interaction diagram of MCS renegotiation according to an embodiment of this application. Two terminal devices that perform Wi-Fi communication may be an AP and a STA, or a GO and a GC, and renegotiate about an MCS set by using a reassociation management frame. As shown in FIG. 6, an MCS renegotiation process may include the following steps:
S601: A STA/GC sends a reconnection request (reassoc request or reassociation request) to an AP/GO.
S602: The AP/GO sends a reconnection response (reassoc response or reassociation response) to the STA/GC.

The reconnection request includes an MCS rate set requested by the STA or the GC, and the reconnection response includes an MCS rate set confirmed by the AP or the GO. An intersection of the MCS rate sets in the reconnection request and the reconnection response may be used to generate an MCS rate set of a current Wi-Fi link that is after negotiation. According to the 802.11ac protocol, a spatial stream 0 indicates support for MCSO to MCS7, a spatial stream 1 (or 01) indicates support for MCSO to MCS8, and a spatial stream 2 (or 10) indicates support for MCSO to MCS9. Therefore, blocking a high-order MCS may be selected.

### 4. Foreground service and background service

Services performed by the terminal device may be classified into foreground services and background services. The foreground service means a service to be displayed, and the background service means a service that actually runs but does not need to be displayed. Classification into foreground services and background services is not limited in this application, and varies based on services actually performed by the terminal device. For example, the terminal device downloads a file and displays file download progress. In this case, file download is a foreground service. For another example, the terminal device performs projection and file download, and a screen displays a projection-related interface. In this case, projection is a foreground service, and file download is a background service.

Usually, an interface needs to be displayed for web page browsing, online video, and online audio, which belong to foreground services in most scenarios. Display is not needed for file download and file sharing, which belong to background services in most scenarios.

### 5. Low-throughput service type and high-throughput service type

The low-throughput service type and the high-throughput service type are a pair of relative concepts. The low-throughput service type means a service type with a lower throughput rate, and correspondingly, the high-throughput service type means a service type with a higher throughput rate. A classification rule of the low-throughput service type and the high-throughput service type is not limited in this application, and may be predefined based on historical statistical data of throughput rates of various services or based on experience.

For example, the low-throughput service type may include but is not limited to at least one of the following service types: web page browsing, online video, online audio, and projection. The high-throughput service type may include but is not limited to at least one of the following service types: file download and file sharing.

In a related technology, an LNA bypass threshold is a fixed signal strength threshold. Because the LNA bypass threshold needs to meet a packet receiver sensitivity requirement in different scenarios, a value of the LNA bypass threshold is large, for example, a receiver sensitivity corresponding to a highest MCS in an MCS modulation and coding table in a communication protocol. In this case, an LNA of the terminal device is likely to be in an on state, an LNA bypass is difficult to take effect, and power consumption of the terminal device is high.

This application provides a method for setting an LNA bypass threshold. The LNA bypass threshold is set based on a highest MCS in an MCS set of a Wi-Fi link that is established by the terminal device, and an appropriate LNA bypass threshold is dynamically selected based on an actual communication status on the premise of meeting a receiver sensitivity requirement. This avoids setting the LNA bypass threshold to an excessively high value, allows for an opportunity to reduce the bypass threshold, increases an opportunity for the LNA bypass, reduces power consumption of the terminal device, and prolongs standby duration of the terminal device.

To make objectives, technical solutions, and advantages of this application clearer, the following describes embodiments of this application in detail with reference to the accompanying drawings. Specific operation methods, function descriptions, and the like in method embodiments may also be applied to apparatus embodiments or system embodiments.

In embodiments of this application, unless otherwise specified, for same or similar parts of embodiments, refer to each other. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined into a new embodiment, implementation, method, or implementation method based on an internal logical relationship of the technical features. The foregoing implementations of this application do not constitute a limitation on the protection scope of this application. Steps in each embodiment may be partially performed (for example, the terminal device may not perform the steps performed by the terminal device in the foregoing embodiments). An execution sequence of different steps can be changed. Embodiments described in this specification may be combined with other embodiments, and steps of different embodiments in this specification may also be combined.

"Embodiments" mentioned in this specification mean that specific features, structures, or characteristics described in combination with embodiments may be included in at least one embodiment of this application. The phrase shown in various locations in this specification may not necessarily mean a same embodiment, and is not an independent or optional embodiment exclusive from another embodiment.

In embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

Terms "first", "second", "third", "fourth", and the like (if any) in embodiments of this application are used to distinguish between similar objects, but do not necessarily indicate a specific order or sequence.

FIG. 7 is a flowchart of a method for setting an LNA bypass threshold according to an embodiment of this application. The method for setting the LNA bypass threshold provided in this embodiment is applicable to a terminal device that performs Wi-Fi communication, and is also referred to as a first terminal device. A device that performs Wi-Fi communication with the first terminal device is referred to as a second terminal device. The first terminal device may be a STA, an AP, a GC, or a GO. Correspondingly, the second terminal device may be an AP, a STA, a GO, or a GC. The method for setting the LNA bypass threshold provided in this embodiment is used to set the LNA bypass threshold. Because the LNAis a receiving component, the first terminal device is a receiving device in Wi-Fi communication, and includes the LNA.

As shown in FIG. 7, the method for setting the LNA bypass threshold provided in this embodiment includes the following steps.

S701: Obtain an MCS set of each of M Wi-Fi links corresponding to the LNA, where M is a positive integer, and the MCS set includes at least one MCS.

A value of M and a quantity of MCSs in the MCS set of each Wi-Fi link are not limited in this embodiment.

The M Wi-Fi links corresponding to the LNA include a Wi-Fi link established between the first terminal device and all second terminal devices in an operating frequency band of the LNA. Values of M are different when operating frequency bands of the LNA, quantities of second terminal devices, and quantities of Wi-Fi links established between the first terminal device and the second terminal device are different.

An example is used for description. The first terminal device includes two LNAs that are denoted as LNA1 and LNA2. An operating frequency band of LNA1 is 2.4 GHz, and an operating frequency band of LNA2 is 5 GHz.

For example, the first terminal device is a STA, and performs Wi-Fi communication with the second terminal device (AP) at 2.4 GHz, to establish a Wi-Fi link. An MCS set of the Wi-Fi link includes MCS4 and MCS5. In this case, LNA1 corresponds to one Wi-Fi link, and LNA2 corresponds to zero Wi-Fi links.

For another example, the first terminal device is a GO, and performs Wi-Fi communication with two second terminal devices (GCs). The first terminal device performs Wi-Fi communication with one second terminal device at 2.4 GHz, to establish a Wi-Fi link, where an MCS set of the Wi-Fi link includes MCS5, MCS6, and MCS7. The first terminal device performs Wi-Fi communication with the other second terminal device at 5 GHz, to establish a Wi-Fi link, where an MCS set of the Wi-Fi link includes MCS6, MCS7, and MCS8. In this case, LNA1 corresponds to one Wi-Fi link, and LNA2 corresponds to one Wi-Fi link.

S702: Set the LNA bypass threshold based on a first highest MCS in the MCS sets of the M Wi-Fi links.

Descriptions are given below with reference to the scenarios shown in FIG. 2A to FIG. 2D and FIG. 4A to FIG. 4C.

For ease of description, this embodiment is described by using an example in which the first terminal device includes one LNA, the LNA supports one operating frequency band, for example, 2.4 GHz, and a Wi-Fi link is established between the first terminal device and the second terminal device.

In an example, as shown in FIG. 2A, the first terminal device is a mobile phone 1, an LNA of the mobile phone 1 corresponds to one Wi-Fi link that is a Wi-Fi link established between the mobile phone 1 and a router 1. An MCS set of the Wi-Fi link includes MCS4 and MCS5. In this case, the first highest MCS is MCS5, and the mobile phone 1 sets the LNA bypass threshold of the LNA based on MCS5. It can be learned that the LNA bypass threshold is no longer a fixed large value, and may be lowered based on an actual service status, and set based on a receiver sensitivity corresponding to MCS5, increasing an opportunity for an LNA bypass to take effect, and reducing power consumption of the terminal device.

In another example, as shown in FIG. 2B, the first terminal device is the mobile phone 1, and the LNA of the mobile phone 1 corresponds to one Wi-Fi link that is the Wi-Fi link established between the mobile phone 1 and the router 1. An MCS set of the Wi-Fi link includes MCS5, MCS6 and MCS7. In this case, the first highest MCS is MCS7, and the mobile phone 1 sets the LNA bypass threshold of the LNA based on MCS7, reducing the LNA bypass threshold, and reducing the power consumption of the terminal device.

In still another example, as shown in FIG. 2C, the first terminal device is a tablet computer, and the second terminal device includes the mobile phone 2 and the mobile phone 3. An LNA of the tablet computer corresponds to two Wi-Fi links: a Wi-Fi link 1 established between the tablet computer and the mobile phone 2 and a Wi-Fi link 2 established between the tablet computer and the mobile phone 3. An MCS set of the Wi-Fi link 1 includes MCS6, MCS7, and MCS8, and an MCS set of the Wi-Fi link 2 includes MCS5, MCS6, and MCS7. In this case, the first highest MCS is MCS8, and the mobile phone 1 sets the LNA bypass threshold of the LNA based on MCS8. In this scenario, the LNA corresponds to a plurality of Wi-Fi links, and the LNA bypass threshold may cover an MCS with a lowest receiver sensitivity in the plurality of Wi-Fi links. In addition, the LNA bypass threshold is reduced based on an actual service status, and the power consumption of the terminal device is reduced.

In still another example, as shown in FIG. 2D, the first terminal device is the mobile phone 1. First, the second terminal device is the router 1, and the LNA of the mobile phone 1 corresponds to one Wi-Fi link that is a Wi-Fi link established between the mobile phone 1 and a router 1. An MCS set of the Wi-Fi link includes MCS4 and MCS5. In this case, the first highest MCS is MCS5, and the mobile phone 1 sets the LNA bypass threshold of the LNA based on MCS5. Then, the second terminal device is a router 2, and the LNA of the mobile phone 1 corresponds to one Wi-Fi link that is a Wi-Fi link established between the mobile phone 1 and the router 2. An MCS set of the Wi-Fi link includes MCS5 and MCS6. In this case, the first highest MCS is MCS6, and the mobile phone 1 sets the LNA bypass threshold of the LNA based on MCS6. In this scenario, the STA and the AP are in a networking mode, and an AP accessed by the STA changes. Assuming that when the STA establishes a Wi-Fi link with a router that supports only an older Wi-Fi communication protocol (for example, Wi-Fi 4), a high-order MCS usually may not be obtained through negotiation for the Wi-Fi link. Instead of setting the LNA bypass threshold to a large fixed value, the LNA bypass threshold is set by using the highest MCS supported by the Wi-Fi link. This reduces the LNA bypass threshold, and reduces the power consumption of the terminal device. In addition, when the STA establishes Wi-Fi links with different routers, different bypass thresholds of the LNA are used, improving flexibility in setting the LNA bypass threshold for different communication statuses.

FIG. 4A is similar to FIG. 2A, FIG. 4B is similar to FIG. 2B, and FIG. 4C is similar to FIG. 2C. A difference lies in a Wi-Fi communication manner and a service that is performed, and examples are not described herein again.

It can be learned that, according to the method for setting the LNA bypass threshold provided in this embodiment, the LNA bypass threshold is set based on a highest MCS in an MCS set of a Wi-Fi link that is established by the terminal device and that corresponds to the LNA, and an appropriate LNA bypass threshold is dynamically selected based on an actual communication status on the premise of meeting a receiver sensitivity requirement. This reduces the LNA bypass threshold, increases LNA bypass time, reduces power consumption of the terminal device, and prolongs standby duration of the terminal device.

Each MCS in the MCS set corresponds to at least one operating bandwidth. For example, refer to Table 1. The 802.11ac protocol specifies that each MCS corresponds to four operating bandwidths: 20 MHz, 40 MHz, 80 MHz, and 160 MHz. After establishing the Wi-Fi link, the first terminal device and the second terminal device may negotiate about an MCS set. Each MCS in the MCS set may correspond to at least one operating bandwidth of 20 MHz, 40 MHz, 80 MHz, and 160 MHz. For example, the MCS set includes MCS6 and MCS7. MCS6 corresponds to four operating bandwidths, including 20 MHz, 40 MHz, 80 MHz, and 160 MHz. MCS7 corresponds to three operating bandwidths, including 20 MHz, 40 MHz, and 80 MHz.

Optionally, the setting the LNA bypass threshold based on the first highest MCS in the MCS sets of the M Wi-Fi links in S702 may include:
setting the LNA bypass threshold based on a receiver sensitivity corresponding to a maximum operating bandwidth of the first highest MCS.

An example is used for description with reference to Table 1. It is assumed that M=1, through MCS negotiation, the MCS sets of the Wi-Fi links include MCS6, MCS7, and MCS8, and MCS8 corresponds to three operating bandwidths, including 20 MHz, 40 MHz, and 80 MHz. In this case, the first highest MCS in the MCS sets of the M Wi-Fi links is MCS8, and a maximum operating bandwidth of the first highest MCS is 80 MHz. As shown in Table 1, the receiver sensitivity corresponding to MCS8 in the operating bandwidth of 80 MHz is -53 dBm, and the LNA bypass threshold is set based on -53 dBm. Optionally, the receiver sensitivity corresponding to the maximum operating bandwidth of the first highest MCS may be set to the LNA bypass threshold. For example, -53 dBm is set to the LNA bypass threshold. Optionally, a threshold fluctuation value may be set, and the LNA bypass threshold is set in a range determined by the receiver sensitivity corresponding to the maximum operating bandwidth of the first highest MCS and the threshold fluctuation value. For example, the threshold fluctuation value is 2 dBm, and the range determined based on the threshold fluctuation value is [-53 dBm-2 dBm, -53 dBm+2 dBm], namely, [-55 dBm, -51 dBm]. The LNA bypass threshold may be set to -50 dBm.

In this implementation, a larger operating bandwidth corresponding to an MCS indicates a larger value of a corresponding receiver sensitivity and a lower receiver sensitivity. The LNA bypass threshold is set based on the receiver sensitivity corresponding to the maximum operating bandwidth of the first highest MCS, so that the LNA bypass threshold can cover an MCS packet with a lowest receiver sensitivity. In addition, this allows for an opportunity to reduce the LNA bypass threshold, and reduces the power consumption of the terminal device.

Optionally, the setting the LNA bypass threshold based on the first highest MCS in the MCS sets of the M Wi-Fi links in S702 may include:
setting the LNA bypass threshold based on an average value of receiver sensitivities corresponding to all operating bandwidths of the first highest MCS.

Optionally, the average value of receiver sensitivities corresponding to all operating bandwidths of the first highest MCS may be set as the LNA bypass threshold. Optionally, a threshold fluctuation value may be set, and the LNA bypass threshold is set in a range determined by the average value of receiver sensitivities corresponding to all the operating bandwidths of the first highest MCS and the threshold fluctuation value. For the threshold fluctuation value, refer to the foregoing description. Details are not described herein again.

In this implementation, the LNA bypass threshold is set based on the receiver sensitivities corresponding to all the operating bandwidths of the first highest MCS, and the LNA bypass threshold is set based on the average statistical value. This reduces the LNA bypass threshold, reduces the power consumption of the terminal device, and improves flexibility in setting the LNA bypass threshold.

Optionally, in this embodiment, a ping-pong avoidance hysteresis value is further set, and is used to avoid frequently turning the LNA on or off based on the LNA bypass threshold. A value of the ping-pong avoidance hysteresis value is not limited in this embodiment.

For example, FIG. 8 is a principle diagram of ping-pong avoidance of an LNA bypass according to an embodiment of this application. As shown in FIG. 8, the LNA supports 2.4 GHz. The LNA bypass threshold is a specific value, for example, -73 dBm. Assuming that the ping-pong avoidance hysteresis value is 8 dBm, a hysteresis area of [-73 dBm, -73 dBm+8 dBm], namely, [-73 dBm, -65 dBm], may be formed based on the ping-pong avoidance hysteresis value and the LNA bypass threshold. When received signal strength is less than -73 dBm, the LNA is turned on to obtain a receiver gain. When received signal strength is greater than -65 dBm, the LNA is turned off or the LNA is bypassed, to reduce power consumption of a terminal. The ping-pong avoidance hysteresis value avoids frequently turning the LNA on or off when the received signal strength fluctuates.

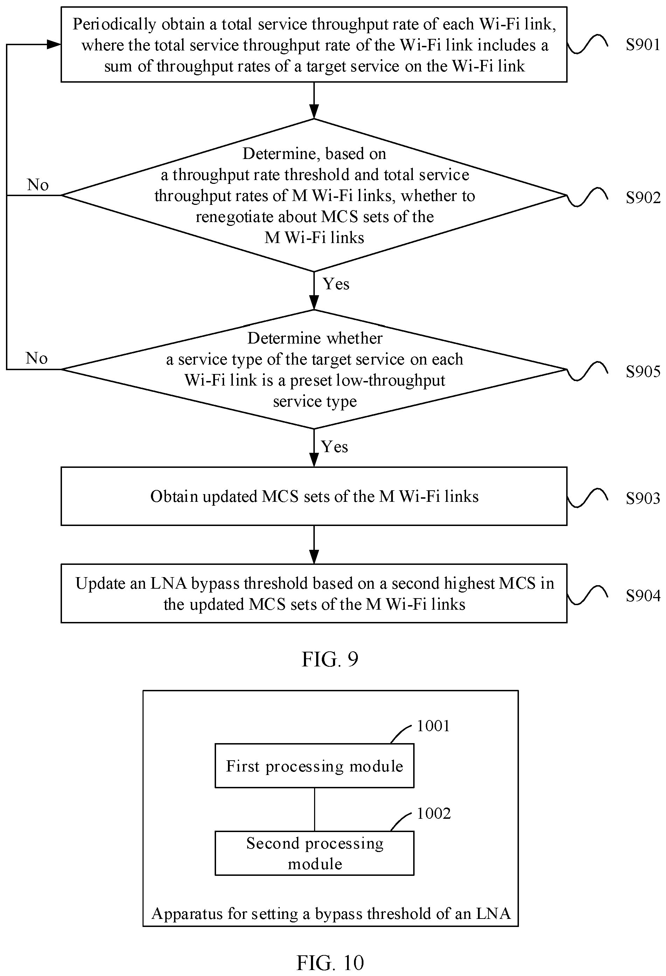

Optionally, FIG. 9 is another flowchart of a method for setting an LNA bypass threshold according to an embodiment of this application. As shown in FIG. 9, the method for setting the LNA bypass threshold provided in this embodiment may further include the following steps.

S901: Periodically obtain a total service throughput rate of each Wi-Fi link. The total service throughput rate of the Wi-Fi link includes a sum of throughput rates of a target service on the Wi-Fi link.

A value of a statistical cycle is not limited in this embodiment.

S902: Determine, based on a throughput rate threshold and total service throughput rates of M Wi-Fi links, whether to renegotiate about MCS sets of the M Wi-Fi links.

If it is determined to renegotiate about MCS sets of the M Wi-Fi links, S903 and S904 are performed. If it is determined not to renegotiate about MCS sets of the M Wi-Fi links, S901 is performed again.

Specifically, for each of the M Wi-Fi links corresponding to the LNA, the throughput rates of the target service on the Wi-Fi link is counted and used as the total service throughput rate, and whether there is a need to renegotiate about MCS sets of the M Wi-Fi links is determined based on the throughput rate threshold, to ensure that current MCS sets or MCS sets that are after renegotiation do not affect a rate of the target service on the Wi-Fi link, improving rationality and accuracy of the MCS sets.

It may be understood that, if the total service throughput rates of the M Wi-Fi links are large, the current MCS sets may limit a service rate, and renegotiation about MCS sets may be performed, to increase an MCS order and ensure a rate of a service performed by a first terminal device. On the contrary, if the total service throughput rates of the M Wi-Fi links are small, and the service rate provided by the current MCS sets exceeds an actual service throughput rate of the first terminal device, renegotiation about MCS sets may be performed, to decrease the MCS order. This can reduce the LNA bypass threshold, reduce power consumption of the first terminal device, and prolong standby duration of the first terminal device.

Optionally, in an implementation, the throughput rate threshold is a preset value, and a value of the preset value is not limited in this embodiment. This implementation is easy to implement.

Optionally, in another implementation, the throughput rate threshold is determined based on a first highest MCS. In this implementation, the throughput rate threshold is determined based on the first highest MCS in the MCS sets of the M Wi-Fi links corresponding to the LNA at current time, improving accuracy of the throughput rate threshold, and improving accuracy of determining whether to renegotiate about MCS sets.

Optionally, the throughput rate threshold can be determined based on a rate corresponding to a maximum operating bandwidth of the first highest MCS. It may be understood that a larger operating bandwidth corresponding to the MCS indicates a higher rate. The throughput rate threshold is determined based on the rate corresponding to the maximum operating bandwidth of the first highest MCS, to ensure that the current MCS sets or MCS sets that are after renegotiation do not affect a rate of the target service on the Wi-Fi link.

Optionally, a ratio of the throughput rate threshold to the rate corresponding to the maximum operating bandwidth of the first highest MCS is a preset ratio. A value of the preset ratio is not limited in this embodiment. For example, if the ratio is 1/10, and the rate corresponding to the maximum operating bandwidth of the first highest MCS is 650 Mbps, the throughput rate threshold is 650 Mbps×1/10=65 Mbps.

It should be noted that a process of renegotiating about MCS is not limited in this embodiment.

S903: Obtain updated MCS sets of the M Wi-Fi links.

S904: Update the LNA bypass threshold based on a second highest MCS in the updated MCS sets of the M Wi-Fi links.

Specifically, after the renegotiation about MCS sets, a highest MCS in the updated MCS sets of the M Wi-Fi links corresponding to the LNA is referred to as a second highest MCS, and the LNA bypass threshold is set based on the second highest MCS.

It can be learned that, whether there is a need to renegotiate about MCS sets is determined by counting the total service throughput rate of the Wi-Fi link corresponding to the LNA and using the throughput rate threshold. When there is a need to renegotiate about MCS sets, the LNA bypass threshold is updated based on the new second highest MCS. The MCS sets are appropriately updated based on an actual service status of the first terminal device. When the actual service throughput rate is high, the rate of the service performed by the first terminal device can be ensured by renegotiating about the MCS sets. When the actual service throughput rate is low, the MCS order can be decreased by renegotiating about the MCS sets, to reduce the LNA bypass threshold, reduce the power consumption of the first terminal device, and prolong the standby duration of the first terminal device.

Optionally, in an implementation, the target service on the Wi-Fi link includes all services on the Wi-Fi link. In this implementation, it can be ensured that the current MCS sets or MCS sets that are after renegotiation do not affect rates of all the services on the Wi-Fi link.

Optionally, in another implementation, the target service on the Wi-Fi link includes a foreground service on the Wi-Fi link. For the foreground service, refer to the foregoing concept description in this application. Details are not described herein again. In this implementation, the foreground service is a service to be displayed, and user experience on the foreground service is more intuitive. Therefore, counting a throughput rate of the foreground service can ensure that the current MCS sets or MCS sets that are after renegotiation do not affect a rate of the foreground service on the Wi-Fi link, improving user experience.

It should be noted that, based on the actual service status of the first terminal device, target services on different Wi-Fi links may be different.

For example, the target service on the Wi-Fi link includes all the services on the Wi-Fi link. In the scenario shown in FIG. 2A, the first terminal device is the mobile phone 1, and the target service on the Wi-Fi link includes a web page browsing service. In the scenario shown in FIG. 2B, the first terminal device is the mobile phone 1, and the target service on the Wi-Fi link includes a web page browsing service and a file download service.

For another example, the target service on the Wi-Fi link includes the foreground service on the Wi-Fi link. In the scenario shown in FIG. 4C, the first terminal device is the tablet computer, and the target service on the Wi-Fi link includes a projection service.

Optionally, the total service throughput rate of the Wi-Fi link may be any one of the following:
a sum of downlink throughput rates of the target service on the Wi-Fi link; or
a sum of downlink throughput rates of the target service on the Wi-Fi link, and a sum of uplink throughput rates of the target service on the Wi-Fi link; or
a sum of downlink throughput rates and uplink throughput rates of the target service on the Wi-Fi link.

Because the MCS sets may affect an uplink service throughput rate and a downlink service throughput rate, the total service throughput rate of the Wi-Fi link may include the sum of the uplink service throughput rates and/or the sum of the downlink service throughput rates, improving flexibility in determining the total service throughput rate of the Wi-Fi link. Because the LNA is a receiving component, the downlink service throughput rates may be first considered or only the downlink service throughput rates may be considered.

An example is used for description. As shown in FIG. 2B, the first terminal device is the mobile phone 1, and the target service on the Wi-Fi link includes a web page browsing service and a file download service. In one statistical cycle, an uplink throughput rate and a downlink throughput rate of the web page browsing service are represented by an uplink throughput rate 1 and a downlink throughput rate 1 respectively, and an uplink throughput rate and a downlink throughput rate of the file download service are represented by an uplink throughput rate 2 and a downlink throughput rate 2 respectively. For the statistical cycle, in the first implementation, total service throughput rate of the Wi-Fi link=downlink throughput rate 1+downlink throughput rate 2; in the second implementation, the total service throughput rate of the Wi-Fi link includes two values: downlink throughput rate 1+downlink throughput rate 2, and uplink throughput rate 1+uplink throughput rate 2; and in the third implementation, total service throughput rate of the Wi-Fi link=downlink throughput rate 1+downlink throughput rate 2+uplink throughput rate 1+uplink throughput rate 2.

Optionally, to further improve accuracy of determining whether there is a need to renegotiate about MCS sets, based on the uplink service and/or the downlink service included in the total service throughput rate of the Wi-Fi link, correspondingly, the throughput rate threshold may include an uplink throughput rate threshold and/or a downlink throughput rate threshold. Specifically, corresponding to the total service throughput rate of the Wi-Fi link, the throughput rate threshold is any one of the following:
a downlink throughput rate threshold; or
the downlink throughput rate threshold, and an uplink throughput rate threshold; or
a sum of the downlink throughput rate threshold and the uplink throughput rate threshold.

Optionally, before S903, S902, or S901, the method for setting the LNA bypass threshold provided in this embodiment may further include:
S905: Determine whether a service type of the target service on each Wi-Fi link is a preset low-throughput service type.

If it is determined that the service type of the target service on each Wi-Fi link is a preset low-throughput service type, S903 is performed. If it is determined that the service type of the target service on each Wi-Fi link is not a preset low-throughput service type, S901 is performed again.

If it is determined that a service of at least one service in target services on all the Wi-Fi links is not a preset low-throughput service type, there is no need to renegotiate about MCS sets, and S903 does not need to be performed.

For the low-throughput service type, refer to the foregoing concept description in this application. Details are not described herein again.

In this implementation, it is determined that all target services are of a low-throughput service type, that is, renegotiation about MCSs may be performed for the preset low-throughput service type, so that after the renegotiation about MCS sets, a highest MCS order is decreased, the LNA bypass threshold is reduced, the power consumption of the first terminal device is reduced, and the standby duration of the first terminal device is prolonged. If not all target services are of a low-throughput service type, it indicates that there is a service of a high-throughput service type in the first terminal device, and renegotiation about MCS sets is not performed, to ensure that a rate of the high-throughput rate service is not affected.

Optionally, when the target service on the Wi-Fi link includes all the services on the Wi-Fi link, it needs to be determined that all the services on the Wi-Fi link belong to a preset low-throughput service type. When the target service on the Wi-Fi link includes the foreground service on the Wi-Fi link, it needs to be determined that all foreground services on the Wi-Fi link belong to a preset low-throughput service type.

An example is used for description. It is assumed that the low-throughput service type includes: web page browsing, online video, online audio, and projection. The high-throughput service type includes file download and file sharing. In an example, as shown in FIG. 2B, the first terminal device is the mobile phone 1, and the target service on the Wi-Fi link includes all the services on the Wi-Fi link, namely, a web page browsing service and a file download service. The file download service does not belong to a low-throughput service type. Therefore, there is no need to renegotiate about MCS sets. In another example, as shown in FIG. 4B, the first terminal device is the mobile phone 1, and the target service on the Wi-Fi link includes the foreground service on the Wi-Fi link, namely, the web page browsing service and the online audio service. Because both the web page browsing service and the online audio service belong to a low-throughput service type, renegotiation about MCS sets may be performed.

Optionally, the determining, based on a throughput rate threshold and total service throughput rates of the M Wi-Fi links, whether to renegotiate about MCS sets of the M Wi-Fi links in S902 may include:
obtaining, based on the total service throughput rate of each Wi-Fi link, total throughput rates corresponding to the LNA in a plurality of cycles, where a total throughput rate corresponding to the LNA in each cycle is equal to a sum of total service throughput rates of the M Wi-Fi links in the cycle; and
determining, based on the throughput rate threshold and the total throughput rates corresponding to the LNA in the plurality of cycles, whether to renegotiate about MCS sets of the M Wi-Fi links.

An example is used for description. As shown in FIG. 4B, the target service on the Wi-Fi link includes all the services on the Wi-Fi link, namely, the web page browsing service and the online audio service, and it is determined that both the web page browsing service and the online audio service belong to a preset low-throughput service type. It is assumed that the total service throughput rate of the Wi-Fi link is the sum of the downlink throughput rates of the target service on the Wi-Fi link. For each statistical cycle, total throughput rate corresponding to the LNA=downlink throughput rate of web page browsing+downlink throughput rate of the online audio service.

The total throughput rates corresponding to the LNA in the plurality of cycles are obtained, and actual service throughput rate data of the first terminal device in the plurality of cycles is compared with the throughput rate threshold, to determine whether to renegotiate about MCS sets of the M Wi-Fi links. This avoids throughput rate fluctuation, and improves accuracy of whether to renegotiate about MCS sets.

Optional, the determining, based on the throughput rate threshold and the total throughput rates corresponding to the LNA in the plurality of cycles, to renegotiate about MCS sets of the M Wi-Fi links may include:
if total throughput rates corresponding to the LNA in consecutive X cycles in the plurality of cycles are all less than the throughput rate threshold, determining to renegotiate about MCS sets of the M Wi-Fi links, where X is an integer greater than 1, and a highest MCS in MCS sets of the Wi-Fi links that are after negotiation is lower than a highest MCS in the MCS sets of the Wi-Fi links that are before negotiation; and
if total throughput rates corresponding to the LNA in consecutive Y cycles in the plurality of cycles are all greater than the throughput rate threshold, determining to renegotiate about MCS sets of the M Wi-Fi links, where Y is a positive integer, and the highest MCS in the MCS sets of the Wi-Fi links that are after negotiation is higher than the highest MCS in the MCS sets of the Wi-Fi links that are before negotiation.

Values of X and Y are not limited in this embodiment.

If the total throughput rates corresponding to the LNA in the consecutive X cycles are all less than the throughput rate threshold, it indicates that the service rate provided by the current MCS sets exceeds the actual service throughput rate of the first terminal device, and renegotiation about MCS sets of all or some of the M Wi-Fi links may be performed. The highest MCS in the MCS sets of the Wi-Fi links that are after the negotiation is lower than the highest MCS in the MCS sets of the Wi-Fi links that are before renegotiation. The MCS order is decreased through negotiation, to further reduce the LNA bypass threshold, reduce the power consumption of the first terminal device, and prolong the standby duration of the first terminal device. In addition, X is set, to avoid decreasing the MCS order during throughput rate fluctuation, and ensure the service rate.

Similarly, Y is set, so that when the total throughput rates corresponding to the LNA in the consecutive Y cycles are all greater than the throughput rate threshold, renegotiation about MCS sets is performed to increase the MCS order and ensure the service rate.

Optionally, Y is less than X. In this implementation, a statistical cycle required for renegotiating about the MCS sets and decreasing the MCS order is greater than a statistical cycle required for determining the renegotiating about the MCS sets and increasing the MCS order, so that adjustment of decreasing the MCS order is more difficult than that of increasing the MCS order, ensuring the service rate of the service performed by the first terminal device.

Optionally, there is a difference of a preset MCS level between the highest MCS in the MCS sets of the Wi-Fi links that are after negotiation and the highest MCS in the MCS sets of the Wi-Fi links that are before negotiation.

The preset MCS level is not limited in this embodiment. For example, the preset MCS level is level 1. In this case, the MCS sets of the Wi-Fi links are progressively adjusted after negotiation, progressively increasing or decreasing. For example, the highest MCS decreases from MCS8 to MCS7, and then when renegotiation about MCS sets is performed, the highest MCS decreases from MCS7 to MCS6. Similarly, the highest MCS increases from MCS5 to MCS6, and then when renegotiation about MCS sets is performed, the highest MCS increases from MCS6 to MCS7.

Optionally, a preset MCS level corresponding to MCS set renegotiation and an increase of a highest MCS order is greater than a preset MCS level corresponding to MCS set renegotiation and a decrease of the highest MCS order decreases in MCS set renegotiation. In this implementation, a fast increase and a slow decrease in the MCS order can be implemented, to ensure the service rate of the first terminal device.

Optionally, when it is determined to renegotiate about MCS sets and the highest MCS order decreases, the highest MCS in the MCS sets of the Wi-Fi links that are after the negotiation is higher than or equal to a preset minimum MCS level.

The minimum MCS level is not limited in this embodiment. The minimum MCS level is set, to ensure that the MCS sets corresponding to the Wi-Fi links can provide a rate corresponding to the minimum MCS level, ensuring service quality.

Optionally, when it is determined to renegotiate about MCS sets and the highest MCS order increases, the highest MCS in the MCS sets of the Wi-Fi links that are after the negotiation is a highest MCS level supported by the first terminal device.

The highest MCS level supported by the first terminal device is not limited in this embodiment, and is related to implementation of the first terminal device according to a Wi-Fi communication protocol.

Optionally, before S903, that it is determined, based on a throughput rate threshold and total service throughput rates of the M Wi-Fi links, to renegotiate about MCS sets of the M Wi-Fi links, and the method for setting the LNA bypass threshold may further include:
determining, based on the throughput rate threshold and the total service throughput rates of the M Wi-Fi links, to renegotiate about MCS sets of N Wi-Fi links of the M Wi-Fi links. N is a positive integer less than or equal to M.

In this implementation, renegotiation about MCS sets of all or some of the M Wi-Fi links may be performed.

Optionally, the N Wi-Fi links may include first N Wi-Fi links obtained by sorting the M Wi-Fi links in ascending order based on the total service throughput rates.

In this implementation, renegotiation about an MCS set of a Wi-Fi link with a smaller actual service throughput rate is first based on the total service throughput rates of the Wi-Fi links, improving rationality of renegotiating about the MCS sets. Optionally, this implementation is applicable to a scenario in which renegotiation about MCS sets is performed and the highest MCS order decreases.

It may be understood that, to implement the foregoing functions, the terminal device includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each specific application with reference to embodiments. However, it should not be considered that the implementation goes beyond the scope of this application.

In embodiments of this application, functional modules of the terminal device may be obtained through division based on the foregoing method examples. For example, each functional module may be obtained through division in correspondence to each function, or two or more functions may be integrated into one module. It should be noted that, in embodiments of this application, module division is an example, and is merely a logical function division. During actual implementation, another division manner may be used. It should be noted that a name of a module in embodiments of this application is an example, and the name of the module is not limited during actual implementation.

For example, FIG. 10 is a diagram of a structure of an apparatus for setting an LNA bypass threshold according to an embodiment of this application. The apparatus for setting an LNA bypass threshold is used in a terminal device. As shown in FIG. 10, the apparatus for setting an LNA bypass threshold may include:
a first processing module 1001, configured to obtain an MCS set of each of M Wi-Fi links corresponding to the LNA, where M is a positive integer, and the MCS set includes at least one MCS; and
a second processing module 1002, configured to set the LNA bypass threshold based on a first highest MCS in the MCS sets of the M Wi-Fi links.

Optionally, each MCS in the MCS set corresponds to at least one operating bandwidth, and the second processing module 1002 is configured to:
set the LNA bypass threshold based on a receiver sensitivity corresponding to a maximum operating bandwidth of the first highest MCS.

Optionally, the first processing module 1001 is further configured to:
periodically obtain a total service throughput rate of each Wi-Fi link, where the total service throughput rate of the Wi-Fi link includes a sum of throughput rates of a target service on the Wi-Fi link;
if it is determined, based on a throughput rate threshold and total service throughput rates of the M Wi-Fi links, to renegotiate about MCS sets of the M Wi-Fi links, obtain updated MCS sets of the M Wi-Fi links; and
the second processing module 1002 is further configured to:
   update the LNA bypass threshold based on a second highest MCS in the updated MCS sets of the M Wi-Fi links.

Optionally, the first processing module 1001 is further configured to: before it is determined, based on a throughput rate threshold and total service throughput rates of the M Wi-Fi links, to renegotiate about MCS sets of the M Wi-Fi links, determine that a service type of the target service on each Wi-Fi link is a preset low-throughput service type.

Optionally, the target service on the Wi-Fi link includes all the services on the Wi-Fi link.

Optionally, the target service on the Wi-Fi link includes the foreground service on the Wi-Fi link.

Optionally, the total service throughput rate of the Wi-Fi link may be any one of the following:
a sum of downlink throughput rates of the target service on the Wi-Fi link; or
a sum of downlink throughput rates of the target service on the Wi-Fi link, and a sum of uplink throughput rates of the target service on the Wi-Fi link; or
a sum of downlink throughput rates and uplink throughput rates of the target service on the Wi-Fi link.

Optionally, the first processing module 1001 is configured to:
obtain, based on the total service throughput rate of each Wi-Fi link, total throughput rates corresponding to the LNA in a plurality of cycles, where a total throughput rate corresponding to the LNA in each cycle is equal to a sum of total service throughput rates of the M Wi-Fi links in the cycle; and
determine, based on the throughput rate threshold and the total throughput rates corresponding to the LNA in the plurality of cycles, to renegotiate about MCS sets of the M Wi-Fi links.

Optionally, the first processing module 1001 is configured to:
if total throughput rates corresponding to the LNA in consecutive X cycles in the plurality of cycles are all less than the throughput rate threshold, determine to renegotiate about MCS sets of the M Wi-Fi links, where X is an integer greater than 1, and a highest MCS in MCS sets of the Wi-Fi links that are after negotiation is lower than a highest MCS in the MCS sets of the Wi-Fi links that are before negotiation.

Optionally, the first processing module 1001 is configured to:
if total throughput rates corresponding to the LNA in consecutive Y cycles in the plurality of cycles are all greater than the throughput rate threshold, determine to renegotiate about MCS sets of the M Wi-Fi links, where Y is a positive integer, and the highest MCS in the MCS sets of the Wi-Fi links that are after negotiation is higher than the highest MCS in the MCS sets of the Wi-Fi links that are before negotiation.

Optionally, Y is less than X.

Optionally, there is a difference of a preset MCS level between the highest MCS in the MCS sets of the Wi-Fi links that are after negotiation and the highest MCS in the MCS sets of the Wi-Fi links that are before negotiation.

Optionally, the preset MCS level is level 1.

Optionally, the highest MCS in the MCS sets of the Wi-Fi links that are after the negotiation is higher than or equal to a preset minimum MCS level.

Optionally, the highest MCS in the MCS sets of the Wi-Fi links that are after the negotiation is a highest MCS level supported by the terminal device.

Optionally, the first processing module 1001 is configured to:
determine, based on the throughput rate threshold and the total service throughput rates of the M Wi-Fi links, to renegotiate about MCS sets of N Wi-Fi links of the M Wi-Fi links, where N is a positive integer less than or equal to M.

Optionally, the N Wi-Fi links include first N Wi-Fi links obtained by sorting the M Wi-Fi links in ascending order based on the total service throughput rates.

Optionally, the throughput rate threshold is determined based on the first highest MCS.

Optionally, the throughput rate threshold is determined based on a rate corresponding to a maximum operating bandwidth of the first highest MCS.

The apparatus for setting an LNA bypass threshold provided in this embodiment is configured to perform the method for setting the LNA bypass threshold provided in the method embodiments of this application. Technical principles and technical effects are similar, and details are not described herein again.

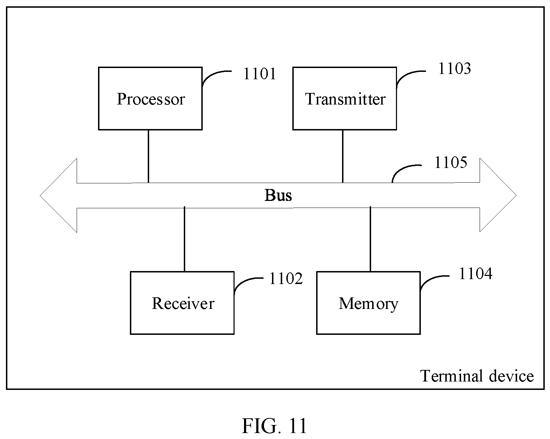

FIG. 11 shows a structure of a terminal device according to an embodiment of this application. The terminal device may be a first terminal device. The terminal device includes a processor 1101, a receiver 1102, a transmitter 1103, a memory 1104, and a bus 1105. The processor 1101 includes one or more processing cores. The processor 1101 runs a software program and a module, to execute various functional applications and perform information processing. The receiver 1102 and the transmitter 1103 may be implemented as a communication component, and the communication component may be a baseband chip. The memory 1104 is connected to the processor 1101 by using the bus 1105. The memory 1104 may be configured to store at least one program instruction, and the processor 1101 is configured to execute the at least one program instruction, to implement the technical solutions in the foregoing embodiments. Implementation principles and technical effects thereof are similar to those of the foregoing related method embodiments. Details are not described herein again.

After the terminal device is powered on, the processor may read the software program in the memory, explain and execute instructions of the software program, and process the data of the software program. When the processor needs to send data through the antenna, after performing baseband processing on the to-be-sent data, the processor outputs a baseband signal to a control circuit in the control circuit. The control circuit performs radio frequency processing on the baseband signal and then sends a radio frequency signal to the outside in the form of the electromagnetic wave through the antenna. When data is sent to the terminal device, the control circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 11 shows only one memory and one processor. In an actual terminal device, there may be a plurality of processors and memories. The memory may also be referred to as a storage medium, a storage terminal device, or the like. This is not limited in embodiments of this application.

In an optional implementation, the processor may include a baseband processor and a central processing unit. The baseband processor is mainly configured to process communication data, and the central processing unit is mainly configured to execute a software program and process data of the software program. A person skilled in the art may understand that the baseband processor and the central processing unit may be integrated into one processor, or may be independent processors, and are connected by using a bus or the like. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program. The processor executes the software program to implement a baseband processing function. The memory may be integrated into the processor, or may be independent of the processor. The memory includes a cache (Cache), and may store frequently accessed data/instructions.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

In this embodiment of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be configured to carry or store expected program code in a form of an instruction structure or a data structure and that can be accessed by a computer, but is not limited thereto.

The memory in embodiments of this application may alternatively be a circuit or any other apparatus that can implement a storage function, and is configured to store the program instructions and/or the data. All or a part of the method provided in embodiments of this application may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, an SSD), or the like.

An embodiment of this application provides a computer program product. When the computer program product runs on a terminal device, the terminal device is enabled to perform the technical solutions in the foregoing method embodiments. Implementation principles and technical effects of the computer program product are similar to those in the foregoing related embodiments. Details are not described herein again.

An embodiment of this application provides a computer-readable storage medium. The computer-readable storage medium stores program instructions. When the program instructions are executed by a terminal device, the terminal device is enabled to perform the technical solutions in the foregoing embodiments. Implementation principles and technical effects thereof are similar to those of the foregoing related embodiments. Details are not described herein again.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A method for setting a low-noise amplifier LNA bypass threshold, applied to a terminal device, wherein the terminal device comprises the LNA, and the method comprises:
obtaining a modulation and coding scheme MCS set of each of M wireless fidelity Wi-Fi links corresponding to the LNA, wherein M is a positive integer, and the MCS set comprises at least one MCS; and
setting the LNA bypass threshold based on a first highest MCS in the MCS sets of the M Wi-Fi links.

2. The method according to claim 1, wherein each MCS in the MCS set corresponds to at least one operating bandwidth, and the setting the LNA bypass threshold based on the first highest MCS in the MCS sets of the M Wi-Fi links comprises:
setting the LNA bypass threshold based on a receiver sensitivity corresponding to a maximum operating bandwidth of the first highest MCS.

3. The method according to claim 1 or 2, wherein the method further comprises:
periodically obtaining a total service throughput rate of each Wi-Fi link, wherein the total service throughput rate of the Wi-Fi link comprises a sum of throughput rates of a target service on the Wi-Fi link;
if it is determined, based on a throughput rate threshold and total service throughput rates of the M Wi-Fi links, to renegotiate about MCS sets of the M Wi-Fi links, obtaining updated MCS sets of the M Wi-Fi links; and
updating the LNA bypass threshold based on a second highest MCS in the updated MCS sets of the M Wi-Fi links.

4. The method according to claim 3, before it is determined, based on a throughput rate threshold and total service throughput rates of the M Wi-Fi links, to renegotiate about MCS sets of the M Wi-Fi links, the method further comprises:
determining that a service type of the target service on each Wi-Fi link is a preset low-throughput service type.

5. The method according to claim 3, wherein the target service on the Wi-Fi link comprises all services on the Wi-Fi link.

6. The method according to claim 3, wherein the target service on the Wi-Fi link comprises a foreground service on the Wi-Fi link.

7. The method according to claim 3, wherein the total service throughput rate of the Wi-Fi link is any one of the following:
a sum of downlink throughput rates of the target service on the Wi-Fi link; or
a sum of downlink throughput rates of the target service on the Wi-Fi link, and a sum of uplink throughput rates of the target service on the Wi-Fi link; or
a sum of downlink throughput rates and uplink throughput rates of the target service on the Wi-Fi link.

8. The method according to claim 3, that it is determined, based on the throughput rate threshold and the total service throughput rates of the M Wi-Fi links, to renegotiate about MCS sets of the M Wi-Fi links comprises:
obtaining, based on the total service throughput rate of each Wi-Fi link, total throughput rates corresponding to the LNA in a plurality of cycles, wherein a total throughput rate corresponding to the LNA in each cycle is equal to a sum of total service throughput rates of the M Wi-Fi links in the cycle; and
determining, based on the throughput rate threshold and the total throughput rates corresponding to the LNA in the plurality of cycles, to renegotiate about MCS sets of the M Wi-Fi links.

9. The method according to claim 8, the determining, based on the throughput rate threshold and the total throughput rates corresponding to the LNA in the plurality of cycles, to renegotiate about MCS sets of the M Wi-Fi links comprises:
if total throughput rates corresponding to the LNA in consecutive X cycles in the plurality of cycles are all less than the throughput rate threshold, determining to renegotiate about MCS sets of the M Wi-Fi links, wherein X is an integer greater than 1, and a highest MCS in MCS sets of the Wi-Fi links that are after negotiation is lower than a highest MCS in the MCS sets of the Wi-Fi links that are before negotiation.

10. The method according to claim 9, the determining, based on the throughput rate threshold and the total throughput rates corresponding to the LNA in the plurality of cycles, to renegotiate about MCS sets of the M Wi-Fi links comprises:
if total throughput rates corresponding to the LNA in consecutive Y cycles in the plurality of cycles are all greater than the throughput rate threshold, determining to renegotiate about MCS sets of the M Wi-Fi links, wherein Y is a positive integer, and the highest MCS in the MCS sets of the Wi-Fi links that are after negotiation is higher than the highest MCS in the MCS sets of the Wi-Fi links that are before negotiation.

11. The method according to claim 10, wherein Y is less than X.

12. The method according to any one of claims 9 to 11, wherein there is a difference of a preset MCS level between the highest MCS in the MCS sets of the Wi-Fi links that are after negotiation and the highest MCS in the MCS sets of the Wi-Fi links that are before negotiation.

13. The method according to claim 12, wherein the preset MCS level is level 1.

14. The method according to claim 9, wherein the highest MCS in the MCS sets of the Wi-Fi links that are after the negotiation is higher than or equal to a preset minimum MCS level.

15. The method according to claim 10 or 11, wherein the highest MCS in the MCS sets of the Wi-Fi links that are after the negotiation is a highest MCS level supported by the terminal device.

16. The method according to any one of claims 3 to 15, that it is determined, based on the throughput rate threshold and the total service throughput rates of the M Wi-Fi links, to renegotiate about MCS sets of the M Wi-Fi links comprises:
determining, based on the throughput rate threshold and the total service throughput rates of the M Wi-Fi links, to renegotiate about MCS sets of N Wi-Fi links of the M Wi-Fi links, wherein N is a positive integer less than or equal to M.

17. The method according to claim 16, wherein the N Wi-Fi links comprise first N Wi-Fi links obtained by sorting the M Wi-Fi links in ascending order based on the total service throughput rates.

18. The method according to any one of claims 3 to 17, wherein the throughput rate threshold is determined based on the first highest MCS.

19. The method according to claim 18, wherein the throughput rate threshold is determined based on a rate corresponding to the maximum operating bandwidth of the first highest MCS.

20. A terminal device, comprising a processor, wherein the processor is configured to: couple to a memory, read instructions in the memory, and enable, according to the instructions, the terminal device to perform the method according to any one of claims 1 to 19.

21. A computer-readable storage medium, wherein the computer-readable storage medium stores computer instructions; and when the computer instructions are run on a terminal device, the terminal device is enabled to perform the method according to any one of claims 1 to 19.
